Europäisches Patentamt

European Patent Office

Office européen des brevets

(19)

(11) Veröffentlichungsnummer : **0 134 462**
**B1**

(12) # EUROPÄISCHE PATENTSCHRIFT

(45) Veröffentlichungstag der Patentschrift :
17.08.88

(51) Int. Cl.⁴ : **A 01 N 25/04**

(21) Anmeldenummer : 84107608.6

(22) Anmeldetag : 30.06.84

(54) Verfahren zur Herstellung von Quellmittel enthaltenden Pflanzenschutzmitteldispersionen.

(30) Priorität : 07.07.83 DE 3324499

(43) Veröffentlichungstag der Anmeldung :
20.03.85 Patentblatt 85/12

(45) Bekanntmachung des Hinweises auf die Patenterteilung : 17.08.88 Patentblatt 88/33

(84) Benannte Vertragsstaaten :
**AT BE CH DE FR GB IT LI NL SE**

(56) Entgegenhaltungen :
FR-A- 1 252 027
FR-A- 1 285 930
FR-A- 2 347 884
US-A- 2 614 061
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Albrecht, Konrad, Dr.**
**Sodener Strasse 64**
**D-6233 Kelkheim (Taunus) (DE)**
Erfinder : **Frisch, Gerhard, Dr.**
**Westerwaldstrasse 7**
**D-6393 Wehrheim/Taunus (DE)**

EP 0 134 462 B1

**0 134 462**

## Beschreibung

Die Erfindung bezieht sich auf ein Verfahren zum Vermischen eines festen Quellmittels mit einer wäßrigen Pflanzenschutzmitteldispersion.

Handelsübliche Pflanzenschutzmitteldispersionen enthalten meist neben Wasser als Trägerflüssigkeit, dem Wirkstoff sowie Netz- und Dispergiermitteln und Entschäumern zusätzlich Quellmittel. Letztere dienen beispielsweise dazu, die Lagerstabilität der Dispersionen zu erhöhen und eine Sedimentation zu verhindern.

Gemäß DE-A-29 24 403 ist die Herstellung von Pflanzenschutzmitteldispersionen durch Naßvermahlung der Materialien mittels Reibkugelmühlen bekannt. Dies geschieht in der Weise, daß man die Komponenten in einem Rührkessel vermischt und diese anschließend in Reibkugelmühlen vermahlt. In bisherigen Verfahren wurde der so hergestellten Vormischung das Quellmittel wie beispielsweise Polysaccharide, Aluminosilikate, Xanthan-Gummi und ähnliche in Form wäßriger konzentrierter Lösungen zugegeben.

Entscheidende Nachteile dieser Verfahrensweise sind darin zu sehen, daß die zugegebenen Quellmittellösungen trotz geringer Quellmittelanteile sehr hochviskos werden und sich demzufolge schlecht handhaben lassen. Wäßrige Lösungen von Quellmitteln, die aus Naturstoffen gewonnen wurden, wie Polysaccharide neigen beim Stehen sehr schnell zur Schimmelbildung, so daß die Lösungen unbrauchbar werden. Besonders nachteilig ist ferner die Tatsache, daß die Quellmittellösungen sich durch den Mahlprozeß in den Reibkugelmühlen dahingehend verändern, daß ihre stabilisierenden Eigenschaften gemindert werden oder sogar gänzlich verloren gehen.

Bei Zugabe von wäßrigen Quellmittellösungen wird meist ein unerwünschter Verdünnungseffekt der Pflanzenschutzmitteldispersionen erzielt. Man muß daher, um hohe Wirkstoffkonzentrationen in der Dispersion zu erreichen, beim Mahlprozeß entsprechend konzentriertere Wirkstoffdispersionen verwenden, um diesen Verdünnungseffekt zu kompensieren. Beim Vermahlen von Dispersionen mit erhöhten Wirkstoffkonzentrationen können, insbesondere bei Verwendung von Wirkstoffen, die zwischen 70° und 100 °C schmelzen, Agglomerationen und Zusammenbackungen auftreten ; als Folge hiervon kann der Mahlprozeß völlig zum Erliegen kommen. Verwendet man Wirkstoffe mit höherem Schmelzpunkt als 100 °C wie beispielsweise Isoproturon oder Carbendazim, erhält man ebenfalls häufig nicht mahlbare hochviskose Dispersionskonzentrate.

Die Zugabe von Quellmitteln durch einfaches Hinzumischen zu den Pflanzenschutzmitteldispersionen war bisher besonders problematisch, da hiermit keine gute Verteilung des Quellmittels in der Wirkstoffdispersion erreicht wird. Dies ist darin begründet, daß das Quellmittel in einer sehr geringen Konzentration von lediglich etwa 0,1 Gew.- % bezogen auf die Pflanzenschutzmitteldispersion vorliegt. So werden bei einer Menge von 4 t Pflanzenschutzmitteldispersion lediglich 4 kg an Quellmittel zugegeben. Beim Einrühren des Quellmittels in die wäßrige Dispersion treten demzufolge leicht Verklumpungen auf ; das Quellmittel kann sich außerdem leicht am Rührwerk festsetzen.

Aufgabe der vorliegenden Erfindung war daher, ein Verfahren zu finden, das es erlaubt, Quellmittel zu Pflanzenschutzmitteldispersionen hinzuzufügen, ohne daß die obengenannten Probleme auftreten.

Es wurde nun überraschenderweise gefunden, daß man das Quellmittel nach den üblichen Mahlprozessen der Pflanzenschutzmitteldispersion zusetzen kann und hierbei überlegene Eigenschaften der so hergestellten, Quellmittel enthaltenden Pflanzenschutzmitteldispersionen erreichen kann, wenn man für den Mischungsvorgang eine Kolloidmühle verwendet.

Gegenstand der vorliegenden Erfindung ist daher ein Verfahren zur Herstellung von wäßrigen, Quellmitel enthaltenden Pflanzenschutzmitteldispersionen, dadurch gekennzeichnet, daß man eine wäßrige Pflanzenschutzmitteldispersion in einer Kolloidmühle mit einem festen Quellmittel vermischt.

Als Kolloidmühlen lassen sich beispielsweise die Zahnscheiben-, Korundscheiben oder Naßschneidemühlen (s. D. Seidel, Maschinenmarkt, Würzburg 85 (1979), S. 44), bevorzugt die Zahnscheibenkolloidmühle, verwenden. Bekannt ist bisher lediglich der Einsatz von solchen Kolloidmühlen für die Vorzerkleinerung von Pflanzenschutzwirkstoffen. Beim erfindungsgemäßen Verfahren erfolgt jedoch kein eigentlicher Mahlvorgang, da die Wirkstoffe der Dispersion bereits in feinst gemahlenem Zustand vorliegen.

Zweckmäßigerweise wird beim erfindungsgemäßen Verfahren die Pflanzenschutzmitteldispersion über einen geeigneten Aufsatz, zweckmäßigerweise einen trichterförmigen Aufsatz so in die Kolloidmühle eingeleitet, bis sich in der Dispersion infolge der Sogwirkung eine trichterförmige Einbuchtung, im folgenden Trombe genannt, bildet. In diese Trombe wird das Quellmittel in fester Form eindosiert. Hierzu wird eine übliche Dosiereinrichtung beispielsweise eine Gericke-Dosiereinrichtung der Firma Gericke verwendet.

In der Kolloidmühle wird die Dispersion und das zugesetzte Quellmittel auf Grund der hohen Scherkräfte beim Durchgang durch die Mühle innigst vermischt. Die gewünschte Entfaltung des Quellmittels tritt hierbei ein.

Die so hergestellten Pflanzenschutzmittel-Dispersionen lassen sich problemlos aufbewahren und besitzen hohe Stabilitäten. Das Quellmittel ist optimal in der Dispersion verteilt.

Als wäßrige Pflanzenschutzmitteldispersionen lassen sich alle üblichen Pflanzenschutzmitteldispersionen verwenden, wobei diese, wie oben beschrieben, beispielsweise gemäß DE-OS-29 24 403 durch

Naßvermahlung mittels Reibkugelmühlen hergestellt werden. So enthalten die Dispersionen die üblichen Netz-, Haft-, Emulgier-, Dispergiermittel und weitere Zusatzstoffe wie Entschäumer, Konservierungsmittel etc. Netzmittel sind beispielsweise polyoxyethylierte Alkylphenole, polyoxethylierte Oleyl- oder Stearylamine, Alkyl- oder Alkylphenylsulfonate. Als Dispergiermittel kommen z. B. infrage ligninsulfonsaures Natrium, 2,2'-dinaphthyl-methan-6,6'-disulfonsaures Natrium, dibutylnaphthalinsulfonsaures Natrium, oleylmethyltaurinsaures Natrium, Na-Lauryletherphosphat, Kondensationsprodukte aus Polyglykolethern (hergestellt aus Nonylphenyl, Ethylenoxid und Formaldehyd), Na-Sulfit und Maleinsäureanhydrid hergestellt (DE-PS-21 32 405, sogenannte Sulfobernsteinsäureester-alkalisalze) oder Kondensationsprodukte aus Kresol, Formaldehyd und Natriumbisulfit. Als Emulgatoren können beispielsweise verwendet werden : alkylarylsulfonsaure Calciumsalze, Fettsäurepolyglykolester, Alkylarylpolyglykolether, Fettalkoholpolyglykolether, polyoxethylierte Oleyl- oder Stearylamine, Propylenoxid-Ethylenoxid-Kondensationsprodukte, Alkylpolyether, Sorbitan-Fettsäureester, Alkylaryl-Propylenoxid-Ethylenoxid-Kondensationsprodukte u. a.

Es lassen sich ferner beliebige übliche Wirkstoffe für die Dispersionen einsetzen, beispielsweise die Wirkstoffe Carbendazim, Isoproturon, Linuron, Endosulfan, Monolinuron.

Als Quellmittel lassen sich alle üblichen Quellmittel wie beispielsweise Polysaccharide, z. B. solche die sich aus den entsprechenden Naturprodukten mittels Xanthomonas-Bakterien herstellen lassen, Aluminosilikate wie Montmorillionite oder Bentonit-Typen z. B. [R]Hectorit, Xanthan-Gummi, Gummiarabicum oder Alginate, insbesondere Polysaccharide, einsetzen. Diese werden üblicherweise in Konzentrationen von 0,01 bis 1 Gew.- %, insbesondere 0,04 bis 0,3 Gew.- %, bezogen auf die gesamte Pflanzenschutzmitteldispersion angewendet.

Das erfindungsgemäße Verfahren wird durch nachfolgende Beispiele erläutert.

## Beispiele 1 (a) und (b)

1 a) 99,9 Gew.-Teile einer wäßrigen Carbendazim-Dispersion (Carbendazim = 2-Methoxycarbonylamino-benzimidazol) der folgenden Zusammensetzung

40 Gew.- % Wirkstoff
12 Gew.- % Dispergiermittel (Sulfobernsteinsäurehalbester-Natrium-Salz, hergestellt durch Umsetzen eines Polyglykolethers auf Basis von Nonylphenyl, Ethylenoxid und Formaldehyd, mit Natriumsulfit und Maleinsäureanhydrid)
2 Gew.- % Na-Ligninsulfonat
2 Gew.- % Entschäumer (Typ SE 2, Wacker-Chemie, München)
4 Gew.- % Alkylpolyglykolglykolether
5 Gew.- % Ethylenglykol
35 Gew.- % Wasser

die durch Reibkugelmühlen feingemahlen wurde, werden in eine Zahnscheibenkolloidmühle (Typ : [R]PUC-Mühle der Firma Probst und Clasen) über einen Trichter-Aufsatz eingeleitet, bis sich in der Dispersion eine Trombe bildet. In diese Trombe werden über eine Gericke-Dosiereinrichtung 0,1 Gew.-Teile eines Polysaccharids ([R]Rhodophol 23) in fester Form während ca. 2 Minuten eindosiert und die beiden Komponenten in der Mühle intensiv miteinander vermischt.

Die so hergestellte Pflanzenschutzmitteldispersion war über 3 Monate bei 50 °C stabil.

## Beispiel 2

99,95 Gew.-Teile einer fertigen wäßrigen Isoproturon-Dispersion (Isoproturon = N-4-isopropylphenyl-N,N'-dimethylharnstoff) der folgenden Zusammensetzung

46,5 % Wirkstoff
6 % Dispergiermittel (Kondensationsprodukt aus Kresol, Formaldehyd und Natriumbisulfit)
3 % Na-Lauryletherphosphat ([R]Forlanit P, Fa. Henkel)
1 % Entschäumer (Typ SE2)
10 % Ethylenglykol
0,05 % Konservierungsmittel ([R]Bronidox L, Fa. Henkel)
33,45 % Wasser

werden wie in Beispiel 1 beschrieben, mit 0,05 Gew.-Teilen [R]Kelzan S (ein Polysaccharid) in der [R]PUC-Mühle vermischt. Die so hergestellte quellmittelhaltige Dispersion war über 3 Monate bei 50 °C lagerstabil.

**Patentansprüche**

1. Verfahren zum Vermischen eines festen Quellmittels mit einer wäßrigen Pflanzenschutzmitteldispersion, dadurch gekennzeichnet, daß man das Vermischen in einer Kolloidmühle durchführt.

2. Verfahren gemäß Anspruch 1, dadurch gekennzeichnet, daß man eine Pflanzenschutzmitteldispersion in eine Kolloidmühle einleitet, bis sich eine Trombe bildet, und das Quellmittel in diese Trombe eindosiert.

3. Verfahren gemäß Ansprüchen 1 bis 2, dadurch gekennzeichnet, daß man als Kolloidmühle eine Zahnscheiben-, Korundscheiben- oder Naßschneidemühle einsetzt.

4. Verfahren gemäß Ansprüchen 1 bis 3, dadurch gekennzeichnet, daß man eine Zahnscheibenkolloidmühle einsetzt.

5. Verfahren gemäß Ansprüchen 1 bis 4, dadurch gekennzeichnet, daß man als Quellmittel Polysaccharide, Aluminosilikate, Xanthan-Gummi, Gummiarabicum oder Alginate verwendet.

6. Verfahren gemäß Ansprüchen 1 bis 5, dadurch gekennzeichnet, daß man 0,01 bis 1 Gew.-% Quellmittel bezogen auf die gesamte Pflanzenschutzmitteldispersion einsetzt.

7. Verwendung von Kolloidmühlen zum Vermischen von festen Quellmitteln mit wäßrigen Pflanzenschutzmitteldispersionen.

## Claims

1. A process for mixing a solid swelling agent with an aqueous plant protection agent dispersion, wherein the mixing is carried out in a colloid mill.

2. The process as claimed in claim 1, wherein a plant protection agent dispersion is introduced into a colloid mill until a whirl forms, and the swelling agent is metered into this whirl.

3. The process as claimed in any one of claims 1 to 2, wherein a toothed disc, corundum disc or wet cutting mill is used as the colloid mill.

4. The process as claimed in any one of claims 1 to 3, wherein a toothed disc colloid mill is used.

5. The process as claimed in any one of claims 1 to 4, wherein a polysaccharide, aluminosilicate, xanthan gum, gum arabic or an alginate is used as the swelling agent.

6. The process as claimed in any one of claims 1 to 5, wherein 0.01 to 1 % by weight of swelling agent, based on the total plant protection agent dispersion, is used.

7. The use of a colloid mill for mixing a solid swelling agent with an aqueous plant protection agent dispersion.

## Revendications

1. Procédé pour mélanger un gonflant solide avec une dispersion aqueuse d'un produit phytosanitaire, procédé caractérisé en ce qu'on effectue le mélangeage dans un broyeur colloïdal.

2. Procédé selon la revendication 1 caractérisé en ce qu'on introduit une dispersion d'un produit phytosanitaire dans un broyeur colloïdal jusqu'à ce qu'il se forme une trombe, et on introduit progressivement le gonflant dans cette trombe.

3. Procédé selon l'une des revendications 1 et 2, caractérisé en ce qu'on utilise, comme broyeur colloïdal, un broyeur à disques dentés, un broyeur à disque de corindon ou un broyeur à couteaux fixes et mobiles travaillant au mouillé.

4. Procédé selon l'une quelconque des revendications 1 à 3, caractérisé en ce qu'on utilise un broyeur colloïdal à disques dentés.

5. Procédé selon l'une quelconque des revendications 1 à 4, caractérisé en ce qu'on utilise, comme gonflants, des polysaccharides, des aluminosilicates, la gomme xanthane, la gomme arabique ou des alginates.

6. Procédé selon l'une quelconque des revendications 1 à 5, caractérisé en ce qu'on utilise de 0,01 à 1 % en poids de gonflant par rapport à l'ensemble de la dispersion de produit phytosanitaire.

7. Application de broyeurs colloïdaux pour le mélangeage de gonflants solides avec des dispersions aqueuses de produits phytosanitaires.